# EUROPEAN PATENT APPLICATION

(11) **EP 1 271 929 A2**
(43) Date of publication of application: **02.01.2003**
(21) Application number: 02018867.8
(22) Date of filing: 24.08.1999
(51) Int. Cl.: H04N 3/15

(54) **Image sensor apparatus**

(62) Divisional of application: 99306700.8
(71) Applicant: Ricoh UK Products Limited, Telford, Shropshire TF2 9NS (GB); Ricoh Company, Ltd., Tokyo 143-8555 (JP)
(72) Inventor: Jones, Timothy Philip, Telford, Shropshire TF3 2LL (GB); Sutton, Nicholas, Telford, Estate, Shrewsbury SY2 5UZ (GB); Hargreaves, Robert William, Stoke-on-Trent, Staffordshire ST3 7YE (GB); Jackson, David, Stafford, Staffordshire ST17 9AT (GB); Frost, Simon James, Telford, Shropshire TF2 9TG (GB); Nishibayashi, Hitoshi, Telford, Shropshire TF5 0AU (GB)
(74) Representative: Leeming, John Gerard

(57) **Abstract**

An image sensor apparatus using three contact image sensors 5A, 5B, 5C arranged in parallel to scan a relatively wide original 2. An interface board 6 controls readout of the image signals from the image sensors at three times normal rate, thins out the resultant data and combines it into a single image signal which is passed to a controller 7 designed to accept and process data from only a single image sensor. The middle image sensor 5B is advanced in the sub-scanning direction by a distance equal to the line spacing and a buffer (82) is used to reorder the image data on a line-by-line basis for printing.

## Description

The present invention relates to image sensor apparatus and particularly to apparatus in which a plurality of contact image sensors are used to scan an image that is wider than any one of them.

Contact image sensors (CIS) are widely used to scan images in apparatus such as facsimile machines, digital photocopiers, scanners, etc.. A CIS may comprise a linear array of sensing elements with a corresponding array of miniature lens portions to focus light reflect from the original image onto the sensing elements, as described in US 4,432,022. CISs having a sensing width of 216mm, slightly more than the width of an A4 sheet of paper, are widely available at reasonable cost. Sensors to scan the width of an A3 page are also available. To scan originals of greater width, a longer CIS may be used but such sensors are more difficult to manufacture and more expensive. To use multiple shorter CISs, it is necessary to design control circuitry for each application. Furthermore, since the sensing width of a CIS is generally shorter than its physical width, blind spots will be left if the CISs are simply butted. Alignment problems can also occur.

So-called electronic whiteboards are known. In such a device, the users write on a large sheet with erasable pens. The sheet is large so that what is drawn or written on it can be read at a distance. The device contains image reading means and a printer so that , on command, a printout of what has been written in the screen can be produced. One design, described in EP-A-0,119,856 uses reducing optics to project an image of the screen sheet onto a line image sensor that is not as long as the scanned width of the screen sheet. The reducing optics are however difficult to adjust and large in size.

Another design, described in US 4,432,022, uses a single long image sensor having a length equal to the width of the screen sheet to be scanned. Such a long image sensor is however difficult and expensive to construct.

Designs using multiple shorter image sensors are also known. Japanese Utility Model Laid Open Publication number 4-60495 discloses an arrangement in which three image sensors are disposed around the curve of a roller around which the screen sheet passes. No details of how the image signals from the different sensors are processed are given. US 4,734,787 proposes the provision of plural registers on the substrate of line sensor chips to enable use of multiple sensors to read a larger image.

Accordingly the present invention aims to provide arrangements whereby multiple contact image sensors can be used conveniently to scan images wider than the effective scanning width of one sensor.
The present invention provides: an image reading apparatus comprising:
a plurality of image sensors arranged to scan respective line portions of an original and output image signals representative thereof, said line portions being substantially parallel to a main scanning direction, at least one of said image sensors being advanced relative to others of said image sensors by a distance equal to a multiple of the line spacing of said apparatus in a sub-scanning direction orthogonal to said main scanning direction;
means for displacing said original relative to said image sensors in said sub-scanning direction; and
means for combining image signals output by said image sensors into a single image signal, comprising:
   a first and second memory areas; and
      read/write control means for:
      in first line scanning periods, writing image data output by said image sensors and representing respective line portions into said first memory area, reading out data output from the or each offset image sensor and writing the data from the or each offset image sensor into said second memory area;
      in second line scanning periods:
         writing image data output by said image sensors into said first memory area, reading out data output from the or each offset image sensor and writing the data read out into said second memory;
         reading out data stored in said second memory area in a preceding line period and writing it into said first memory area to overwrite the data of the or each offset image sensor read out during a current line scanning periods; and
         reading out data from said first memory for output.

The means for combining the image signals may be an interface for use in an image forming apparatus to connect N image sensors, N being an integer greater than 1, to a controller, said controller being adapted to receive a signal in a predetermined format and, in use, periodically outputting a first shift pulse signal to command the supply of a first image signal to it and a first clock signal to control the timing of said first image signal, the interface comprising:
shift pulse generating means, responsive to said first shift pulse output by said controller, for generating N second shift pulses during the period of said first shift pulse, for supply to respective ones of said N image sensors;
clock signal generating means for generating a second clock signal having a frequency N times that of said first clock signal; and
multiplexing means for receiving N image signals output by said N image sensors in response to said second shift pulses and combining said N image signals into a single image signal for supply to said controller, whereby said single image is in said predetermined format.

With the interface of the invention multiple image sensors can be used with a controller designed for use with one. The signals from the image sensors are readout under the control of the interface and combined into a signal of the form expected by the controller. The interface may easily be adapted for any number of image sensors by appropriately setting the rate of the clock generator. The multiplexor may include sub-sampling means for reducing the number of samples in the combined signal and the degree of thinning out by the sub-sampler may also be controlled according to the number if image sensors being used.

The present invention will be described below with reference to exemplary embodiments and the accompanying drawings, in which:
Figure 1 is an overall schematic diagram of an electronic whiteboard according to a first embodiment of the invention;
Figure 2 is a schematic diagram of the sensing arrangements of the embodiment of Figure 1;
Figure 3 is a schematic perspective view of a contact image sensor used in the invention;
Figure 4 is a schematic diagram of the interface unit used in the embodiment of Figure 1;
Figure 5 is a timing diagram for the embodiment of Figure 1;
Figures 6 and 7A-D are diagrams used for explaining the ordering of image data received from the image sensors;
Figure 8 is a timing diagram for the data ordering process
Figures 9A-E are diagrams explaining the effects of misalignment of the image sensors; and
Figure 10 is an enlarged side view of the mounting arrangement for the image sensors of the embodiment of Figure 1.

In the various drawings, like parts are identified by like references.

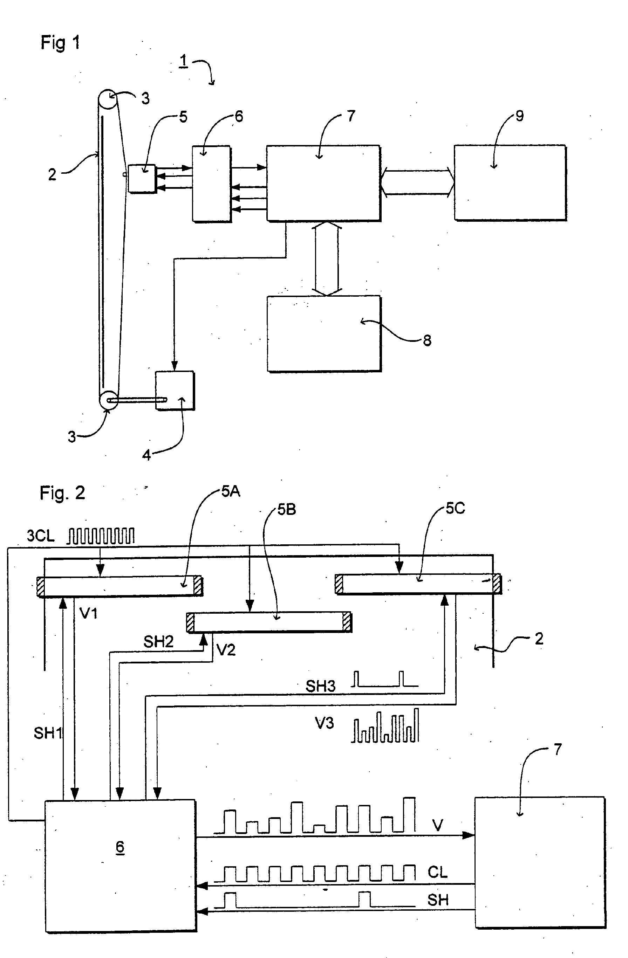

Figure 1 shows schematically the major components of an electronic whiteboard 1 according to the present invention. The user of the whiteboard 1 draws, usually with coloured erasable pens, on the front face of the screen sheet 2. Screen sheet 2 comprises a non-porous flexible sheet formed into a continuous loop. The outer surface is generally of a pale colour, e.g. white, and may be plain or provided with a grid or rules to guide the user.

The screen sheet 2 is supported by two rollers 3 which are spaced apart so as to maintain a reasonable tension in the screen sheet 2. When the user desires to take a copy of what has been drawn on the screen sheet, he or she operates a control (not shown) to initiate the copying procedure. In the copying procedure, at least one of the rollers 3 is driven by motor 4 to rotate so that the portion of the screen sheet that was previously at the front of the apparatus is fed past image sensor 5, which reads the design drawn on it. The image signal output by image sensor 5 is processed by interface 6 and passed to micro-controller 7. Microcontroller 7 carries out further image processing, using memory 8 as necessary, and passes the final image to output device 9. Output device 9 may be a thermal printer or other suitable printer which prints an image of the design drawn on screen sheet 2 on paper. Alternatively it may be a storage device or modem. Overall control of the process is carried out by micro-controller 7.

The image sensor 5 and signal processing arrangements are shown in greater detail in Figure 2. The image sensor 5 comprises three contact image sensors 5A, 5B, 5C arranged in parallel across the width of the screen sheet 2. The middle sensor 5B is offset from the outer two sensors so that their scan widths overlap. In an embodiment of the invention a screen sheet of 600mm width is scanned by three sensor elements each with an effective scanning width of 216mm. Suitable image sensors, whose structure is described below, are manufactured by Mitsubishi Corp. of Japan. Accordingly, there is an overlap of 16mm between the scanning widths of sensors 5A, 5B and between sensors 5B, 5C. As will be discussed below, this allows the end portions of the sensors to be left unused. The physical overlap is somewhat greater as the physical length of the case of each sensor is a few millimetres longer than its scanning width.

Other widths of screen sheet can also be accommodated. To design a reader, it is necessary to select a screen sheet and sensors such that the screen sheet width is a multiple of the utilised scanning length of the selected sensor. The utilised scanning length is selected to be shorter than the maximum effective scanning length of the sensor so that the ends of it need not be used. This is because the illumination provided by the contact image sensor, the structure of which is described below, is often not completely uniform at the ends thereof. This results in a degradation of the video signal produced by the end sensing elements in the sensor, which is avoided by not using them.

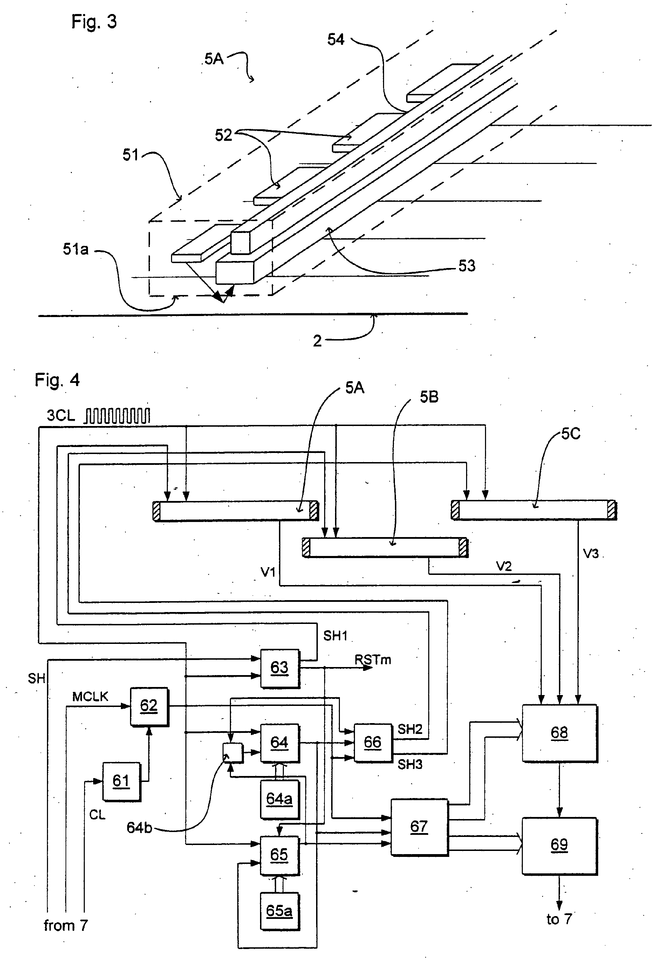

A contact image sensor 5A is shown in greater detail in Figure 3. The other sensors 5B, 5C are identical. As shown in Figure 3, sensor 5A consists of a case 51 which houses a series of LED light sources 52 which emit light on to the screen sheet 2. Light reflected from the screen sheet 2 is gathered by rod lens array 53 and focussed on respective elements of the sensor element array 54. The sensor elements accumulate charge according to the amount of light they receive during the exposure period, which represents an image of a line of the screen sheet 2.

Referring again to Figure 2, the line image signals are read out in turn from the three image sensors 5A, 5B, 5C under control of the interface 6 and micro-controller 7. The micro-controller 7 is adapted to control a single contact image sensor. To receive each line image signal it therefore emits a shift pulse signal SH to cause the image sensor to begin to read out the line image signal and a series of clock pulses CL to control read out of the image signal pixel by pixel. During the readout process, the charge signal accumulated in the sensor elements is transferred to an analogue shift register having a corresponding number of cells. The charge signal from the end cell is read out and the signal in each cell shifted one step along. The interval between successive shift pulses is the line scan time.

In the present invention, the interface 6 enables the microcontroller 7, which has been designed for use with one contact image sensor, to be used to with multiple sensors, in this case three. In response to the shift pulse signal SP, the interface 6 generates first, second and third shift pulse signals SH1, SH2 and SH3 at intervals equal to one third the line scan time. Shift pulse signals SH1, SH2, SH3 are applied respectively to the sensors 5A, 5B, 5C which then read out their respective line image signals V1, V2, V3 under control of a tripled clock signal 3CL, generated by the interface 6 in response to the clock CL output by the micro-controller 7. The tripled clock signal 3CL has a frequency three times that of the clock signal CL output by the micro-controller 7 so that all the three line image signals V1, V2, V3 from the sensors 5A, 5B, 5C are each read out in a time equal to one third of the line scan period.

The interface 6 generates a composite line image signal V from the three line image signals V1, V2, V3 output by the image sensors 5A, 5B, 5C. This is done by discarding two out of every three consecutive samples in image signals V1, V2, V3 and chaining the three signals together. Samples from the overlap areas shaded in Figure 2 are discarded. The composite line image signal V thus contains the same number of samples at the same timing as a signal output from a single contact image sensor and matches the expectations of the micro-controller. In an alternative embodiment three samples of each of the line image signals V1, V2, V3 may be averaged to produce one sample of the composite line image signal V.

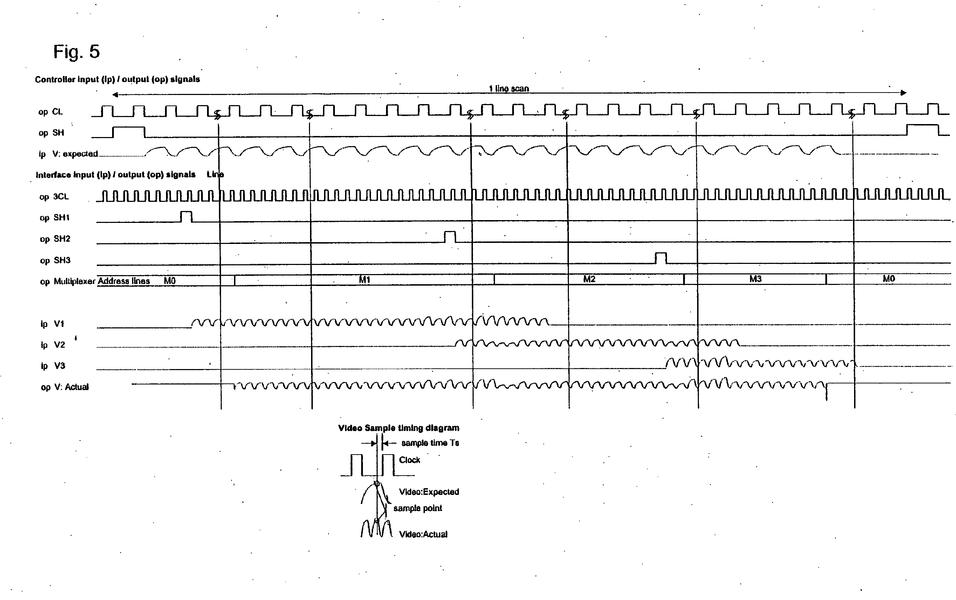

Figure 4 shows in greater detail one embodiment of the interface 6 and its connection to the image sensors 5A, 5B, 5C. The operation of interface 6 will be explained with reference also to Figure 5, which is a timing diagram of the various signals in the system.

The interface 6 is supplied by the micro-controller 7 with a master clock signal MCLK in addition to the clock signal CL which is intended for clocking the read out from the image sensors and the shift pulse signal SH which signals the start of a line scan period, mentioned above. The master clock signal has a frequency very much greater than the sensor clock signal CL and in the interface 6 is used by clock generator 62 to generate the tripled clock signal 3CL signal, which is used to clock the readout from image sensors 5A, 5B, 5C. A sync signal is generated by sync generator 61 from the clock signal CL and passed to the clock generator 62 to keep the tripled clock signal 3CL synchronised to the clock signal CL. The tripled clock signal 3CL is also supplied to first pulse generator 63, first counter 64, second counter 65, second pulse generator 66 and controller 67.

In response to the shift pulse SH from the micro-controller 7, first pulse generator 63 generates the first shift pulse signal SH1 at the beginning of each line scan period to cause the first image sensor 5A to begin its read out. First pulse generator also generates a master reset signal RSTm. The master reset signal RSTm is supplied to the reset input of second counter 65 and, via OR-gate 64b, to the load input of first counter 64.

At the beginning of the line scanning period, shift pulse SH1 is generated and causes image sensor 5a to output image signal V1, clocked by the tripled clock signal 3CL. At the same time second counter 65 loads second count value cnt2 and begins to count clock pulses from the tripled clock 3CL. Second count value cnt2 represents the number of pixels at the beginning of the scan of each image sensor that are to be disregarded. Therefore, when second counter 65 has completed its count, count 2 done signal is supplied to controller 67 which switches multiplexor control signal M0 low and multiplexor control signal M1 high. These signals are passed to multiplexor 68 which then passes image signal V1 to its output.

The count 2 done signal is also supplied to the load input of first counter 64, via OR-gate 64b, which then loads first count value cnt1 from count value store 64a and begins to count clock pulses. First count value cnt1 represents the distance from the beginning of the used part of the scan range of sensor 5A to the beginning of sensor 5B. When the first counter 64 has completed its count, a count 1 done signal is output to the second shift pulse generator 66, controller 67 and the load input of second counter 65. In response to the count 1 done signal, the shift pulse generator outputs shift pulse signal SH2 to sensor 5b which begins to output image signal V2 under control of the tripled clock signal 3CL. Second counter 65 meanwhile begins to count again.

As before, the count 2 done signal is passed to the controller 67 which, on receipt, switches multiplexor signal M1 to low and M2 to high. Until this change over, multiplexor 68 continues to pass image signal V1 to its output so that a length of the beginning of image signal V2 equal to the second count value cnt2 is disregarded. After the changeover, image signal V2 is passed to the output of multiplexor 68 and the remainder of image signal V1 is disregarded.

The count 2 done signal again causes first counter 64 to begin count 1 again so that the sub-cycle repeats for image sensors 5B and 5C before the next shift pulse SH2 from the multiplexor causes the whole cycle to repeat for the next line.

The first and second count values cnt1, cnt2 determine the position and length of the used portion the image signal from each image sensor. To enable automatic adjustment of the position of the used portion, count value stores 64a, 65a can be non-volatile memory elements provided in the interface board or elsewhere in the device. Alternatively, DIP switches can be used to allow manual setting of binary values.

It will be seen that the output of multiplexor 68 comprises a line image signal representing the whole width of screen sheet 2 in the line scan period (e.g. 10 ms) expected by the microcontroller 7. However, this composite signal still contains three times too many samples. Accordingly, the gain circuit 69, under control of controller 67, eliminates two out of every three samples and adjusts the gain of the third to an appropriate level for the micro-controller 7. In alternative embodiments the gain circuit may be embodied as a sample and hold circuit or may be replaced by an averaging circuit to average each group of three samples.

The final five lines of Figure 5 illustrate the net effect of the above processing. When multiplexor address line M0 is high, none of the video signals V1, V2, V3 is passed to the output. When multiplexor address line M1 goes high, at the completion of count 2, video signal V1, which started at the end of count 1, is passed to the output. The next completion of count 1 starts readout from image sensor 5B producing video signal V1 and at the end of count 2, Multiplexor address signal M2 goes high in place of M1 so that video signal V2 is passed for output instead of V1. The same occurs for the change over from V2 to V3.

The insert to Figure 5 shows how the sub-sampling can be arranged by setting a sample time Ts relative to each clock pulse CL so as to sample one of the three pixels in each clock period.

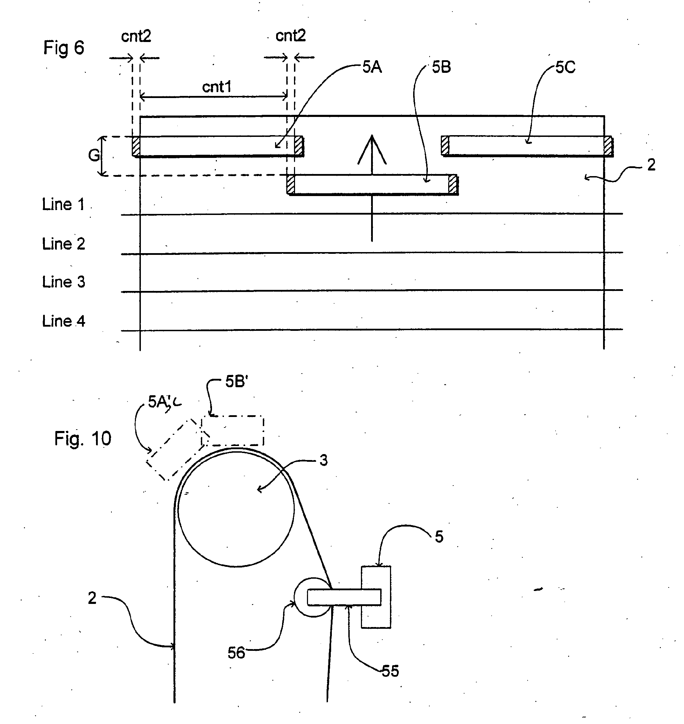

As can be seen from Figure 6, in a given line scan period, the central image sensor 5B will be scanning a physically advanced position on the screen sheet 2 relative to that scanned by the other two sensors. Of course, in other embodiments of the invention a central image sensor can be behind, rather than ahead of, the other sensors. If the composite image signal V is directly sent to the printer 9, the middle portion of the output will be displaced relative to the two sides. The image can be rearranged in a page memory before printing. However, the invention also provides an alternative method using two smaller memories which avoids the expense of providing a page memory and avoids the delay incurred by waiting until the whole screen sheet has been scanned before rearranging the image. This method relies on the fact that the central image sensor 5B is displaced ahead of the other two sensors by a distance G equal to an integer multiple, N, times the distance between successive scan lines of the screen sheet. The value of n will depend on the physical structure of the selected image sensors and may be of the order of 60. In a specific embodiment of the invention it is 65.

It will be understood that other image processing steps may be applied to the image data read from the sensors and these may be performed before or after the data re-ordering process described herein.

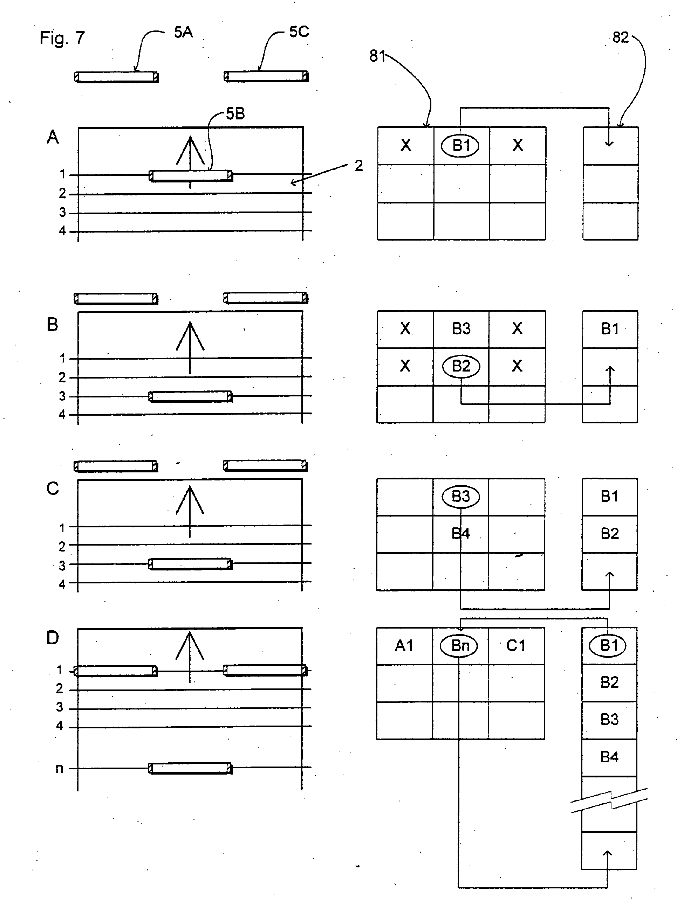

As shown in Figure 7A, at the beginning of the screen sheet copying process, the centre image sensor 5B is positioned to scan the first line of the image whilst the outer two are positioned outside the normal scanning area. The image data from the first line scan is read out and stored in memory 81, which may be a RAM with a capacity sufficient for three line images. The data in middle section B1 represents the central portion of line one of the image to be copied, read by sensor 5B. This data is readout of memory 81 into a buffer memory 82. Buffer memory 82 may be a FIFO memory with capacity equal to n line images or a further portion of the same RAM as memory 81. The data scanned by the outer sensors 5A, 5C, indicated by X in Figure 7B, is unwanted and is overwritten or discarded.

During the transfer of the B1 data to the buffer memory, the screen sheet is advanced and another line scan carried out. The resultant data is stored in another row of memory 81 and will be seen to represent unwanted data of the outer portions and the central portion of line 2, data B2, as shown in Figure 7B. Again, the middle portion data, B2, is read out and stored in buffer memory 82. As shown in Figure 7C this process repeats for line 3 and then for the rest of n lines, n (as mentioned above) being the offset between sensors in lines intervals.

As shown in Figure 7D, when the central image sensor 5B reaches line n, the outer sensors 5A, 5C will reach and scan line 1. The data read into memory 81 is therefore data of line portion A1, Bn and C1. The Bn data is transferred to the end of memory 82 and replaced by data B1 from the top of memory 82. Memory 81 therefore now contains a correctly aligned row of data which can be read out to the printer and the process repeats.

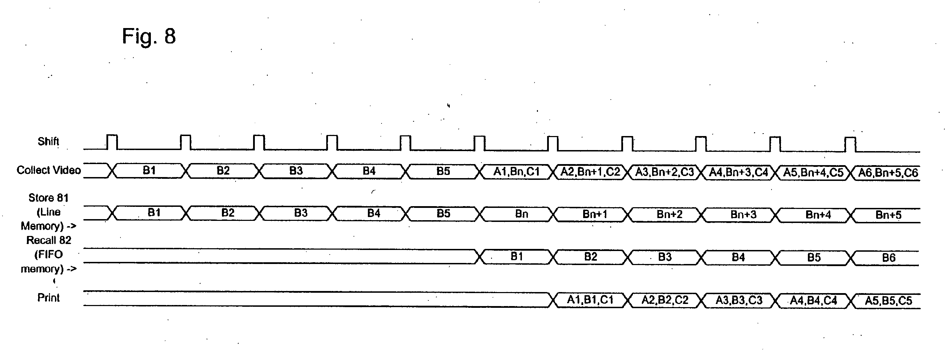

A timing diagram for this process is given in Figure 8. The first and second lines show the shift pulses SH which define the time frame for the process and the video collected from the sensors. For the first n lines, the data collected from sensors 5A, 5C is disregarded. The third and fourth lines show respectively the date transferred from memory 81 to the buffer memory 82 and, starting at line period n, the data transferred back from the buffer memory 82 to the memory 81. The final line shows the memory transferred to the printer, beginning in line n+1.

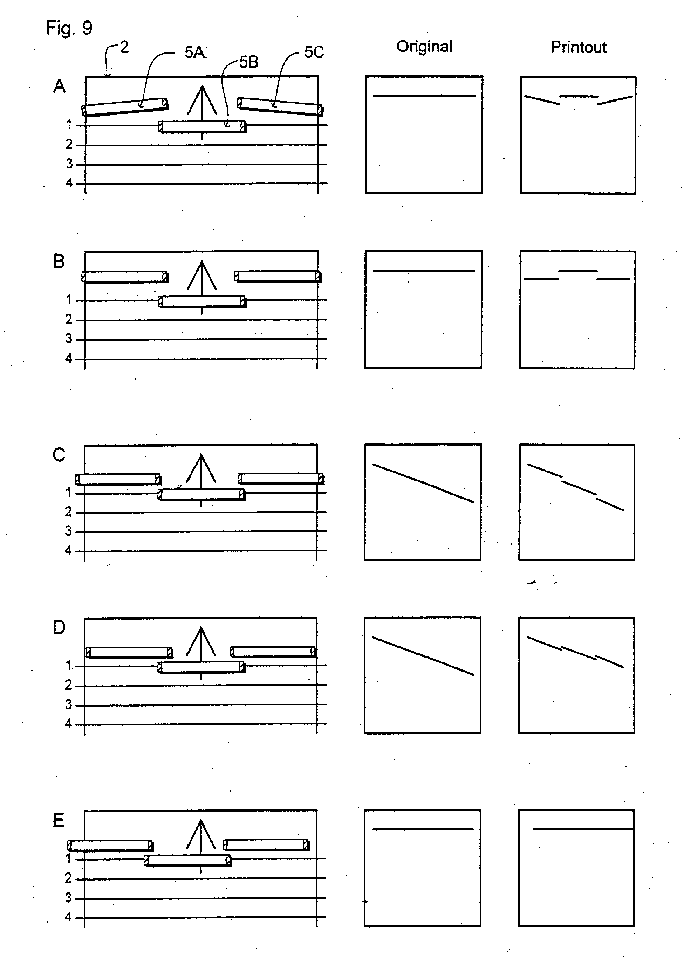

Accurate alignment of the image sensors is important. As shown in Figures 9A to E, misalignment of the sensors 5A, 5B, 5C in various ways results in different distortions of the original image in the printout, as follows:

| | Fault | Effect |
|---|---|---|
| A | non-parallel sensors | a horizontal line is broken into disconnected, non-parallel line segments |
| B | displacement of central sensor not equal to line interval | horizontal line broken into displaced line segments |
| C | overlap of sensors insufficient | diagonal line broken into disconnected line segments |
| D | overlap of sensors too great | diagonal line broken into disconnected |
| | | line segments |
| E | sensors displaced to one side | horizontal line displaced in opposite |
| | | direction |

Misalignment of the sensors can be detected and corrected manually, for example using a test sheet having a horizontal line drawn under the active portions of each image sensor and examining their outputs with an oscilloscope, or automatically.

The contact image sensors used in the present embodiment have a relatively shallow depth of focus. When used in facsimile machines and the like, the original being scanned is pressed against the glass bottom 51a of the case 51 by a roller. However, if the screen sheet 2 were to be pressed against the sensors 5, abrasion would quickly obliterate anything drawn on the image sheet and ink powder deposited in the apparatus would degrade the apparatus. The screen sheet must therefore be spaced from the sensors 5 but this spacing must be kept constant to avoid variation in the white level and hence reduction in the quality of the resultant image.

To solve these problems the present invention provides an arrangement as shown in Figure 10, which is an enlarged side view of part of the apparatus of Figure 1. The image sensors 5 are mounted in a support bracket 55 which has an arm at either end extending in the forward direction of the sensors. A positioning roller 56 is provided between the two arms extending parallel to the image sensors a predetermined distance from the front face of the sensors. The screen sheet 2, which is under tension, passes between the positioning roller 56 and the image sensors 5 and the whole assembly is displaced backward in the device so that the tension in the screen sheet 2 holds it against the positioning roller 56. In this way a constant separation between screen sheet and sensors is ensured.

In an alternative embodiment, the sensors 5A', 5B', 5C' can be-mounted in fixed positions relative to the roller 3, as shown in phantom in Figure 10.

The invention has been described above in relation to its use in an electronic whiteboard using three sensors to scan the width of the screen sheet. It will be appreciated however that the invention can be applied to other apparatus. In particular the interface of the invention can be used to combine outputs from N image sensors by dividing the line scan interval into N sub-periods, reading out each sensor at N times the normal rate and thinning the read-out image signals by averaging or sub-sampling. The invention is also equally applicable to black and white and colour apparatus. The invention may also be applied to apparatus where the image sensors are moved relative to a stationary original.

## Claims

1. An image reading apparatus comprising:
a plurality of image sensors (5A, 5B, 5C) arranged to scan respective line portions of an original and output image signals representative thereof, said line portions being substantially parallel to a main scanning direction, at least one of said image sensors (5B) being advanced relative to others of said image sensors by a distance equal to a multiple of the line spacing of said apparatus in a sub-scanning direction orthogonal to said main scanning direction;
means (3, 4) for displacing said original relative to said image sensors in said sub-scanning direction; and
means (6, 7) for combining image signals output by said image sensors into a single image signal, comprising:
a first and second memory areas (81, 82); and
read/write control means (7) for:
in first line scanning periods, writing image data output by said image sensors (5A, 5B, 5C) and representing respective line portions into said first memory area (81), reading out data (B1) output from the or each offset image sensor and writing the data from the or each offset image sensor (5B) into said second memory area (82);
in second line scanning periods:
writing image data output by said image sensors (5A, 5B, 5C) into said first memory area (81), reading out data (Bn) output from the or each offset image sensor (5B) and writing the data read out into said second memory (82);
reading out data (B1) stored in said second memory area (82) in a preceding line period and writing it into said first memory area (81) to overwrite the data (Bn) of the or each offset image sensor read out during a current line scanning periods; and
reading out data from said first memory for output.

2. An image forming apparatus according to claim 1, wherein the or each offset image sensor (5B) is offset from others of said image sensors (5A, 5C) by a distance equal to a multiple of the line spacing.

3. An image forming apparatus according to claim 1 or 2, wherein said means for combining (6, 7) comprises:
a controller (7) for periodically outputting a first shift pulse signal (SH) to command the supply of a first image signal to it and a first clock signal (CL) to control the timing of said first image signal; and
an interface according to any one of claims 1 to 7.

4. An image forming apparatus according to any one of claims 1, 2 or 3, further comprising a printer (9) for printing said single image signal.

5. An image forming apparatus according to any one of claims 1, 2 or 3, further comprising a storage device for recording said single image signal.

6. An image forming apparatus according to any one of claims 1 to 5, wherein said original is an endless loop of a sheet material that may be erasably drawn on.

7. An image reading apparatus comprising:
a plurality of image sensors arranged to scan respective line portions of an original and output image signals representative thereof, said image sensors scanning the original while moving relatively to the original in a sub-scanning direction orthogonal to the main scanning direction, and said image sensors comprising a front sensor group having one or more sensors arranged so as to be parallel to the scanning direction and a back sensor group having one or more sensors arranged so as to be parallel to the scanning direction, wherein the front sensor group is positioned at an upstream position in the sub-scanning direction relative to the back sensor group and wherein the front sensor group and the back sensor group are configured so as to be staggered with respect to each other;
a first memory area which stores first image data output by the front and back image sensor groups;
a second memory area which stores second image data which are output by the front sensor group and which is readout of the first memory area into the second memory area;
a data exchanging device which exchanges third data, which are data of the n^{th} line portion which are output by the front sensor group and which are included in the first data group together with data of the m^{th} line portion output by the back sensor group, with data of m^{th} line portion which are output by the front sensor group and which have been stored in the second memory area, to form fourth data in the first memory; and
an output device which outputs the fourth data.

8. An image reading apparatus according to claim 7, wherein the front sensor group is apart from the back sensor group in the sub-scanning direction by a distance which is an integer multiple of a sub-scanning pitch of the front sensor group and the back sensor group.
